Europäisches Patentamt

European Patent Office

Office européen des brevets

(11) Publication number: **0 164 979 B1**

# EUROPEAN PATENT SPECIFICATION

(45) Date of publication of patent specification: **24.04.91**   (51) Int. Cl.⁵: **H04N 3/22**

(21) Application number: **85303883.4**

(22) Date of filing: **03.06.85**

(54) Timebase circuit.

(30) Priority: **05.06.84 GB 8414315**

(43) Date of publication of application:
**18.12.85 Bulletin 85/51**

(45) Publication of the grant of the patent:
**24.04.91 Bulletin 91/17**

(84) Designated Contracting States:
**DE FR IT NL**

(56) References cited:
**DE-A- 1 791 026**
**DE-A- 3 236 129**
**DE-B- 1 253 754**
**DE-B- 1 915 188**
**DE-B- 2 041 228**

(73) Proprietor: **MOTOROLA, INC.**
**1303 East Algonquin Road**
**Schaumburg, IL 60196(US)**

(72) Inventor: **Jobling, David Trevor**
**7 Avenue Soret**
**CH-1203 Geneva(CH)**
Inventor: **Newton, Anthony David**
**Les Jordils**
**CH-1261 Le Vaud(CH)**

(74) Representative: **Ibbotson, Harold et al**
**Motorola Ltd Patent and Licensing Oper-**
**ations - Europe Jays Close Viables Industrial**
**Estate**
**Basingstoke Hampshire RG22 4PD(GB)**

EP 0 164 979 B1

## Description

This invention relates to a correction circuit for a television type picture tube timebase. The invention is particularly although not exclusively applicable to a domestic television receiver.

A television picture is generated by means of timebase circuits which provide ramp currents, in order to drive the electron beam of the tube, either vertically down or horizontally across the tube. The simplest form of known timebase circuit generates a linear sawtooth waveform.

A problem occurs in known circuits due to variations in tube EHT voltage. When a picture becomes brighter the EHT voltage drops due to extra loading.

The drop in the EHT voltage causes the picture height to lengthen and the width to increase due to extra deflection of the electron beam since the electrons accelerated by a reduced EHT voltage have reduced energy when passing through the deflection coils.

A correction circuit in accordance with the precharcterising part of claim 1 is disclosed in DE-B-2041228. The disclosed circuit has the disadvantage of not being adaptable to different values of external components as would be found in different television sets.

This invention seeks to provide a correction circuit in which the above mentioned problem is mitigated.

In the present invention there is provided means for providing an adjustable reference signal and a multiplier for multiplying the electrical signal and the reference signal to provide a correction signal for correcting at least one picture dimension for changes in EHT voltage.

Preferably the means for providing the adjustable reference signal comprises a digital-to-analog converter having input means for receiving a selectable digital code and an output for providing an analogue output signal.

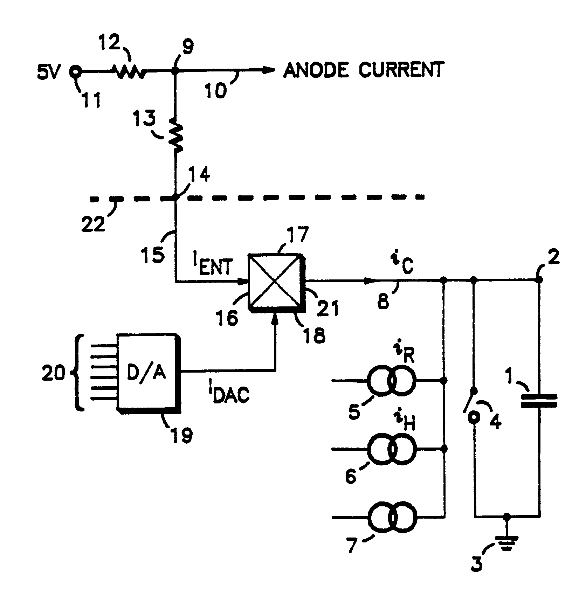

An exemplary embodiment of the invention will now be described with reference to the single figure drawing which illustrates schematically part of a television vertical time base circuit in accordance with the present invention.

Referring to the figure the time base circuit illustrated comprises a ramp capacitor 1 coupled between a terminal 2 and a reference terminal 3 which is typically an earth terminal.

The time base waveform, which is typically a sawtooth waveform, is formed on the capacitor 1 by charging the capacitor by means of current applied to the terminal 2 and by periodically discharging the capacitor by means of a switch 4 coupled between the terminal 2 and the earth terminal 3.

The ramp voltage generated at the terminal 2 is then available for use for coupling to the vertical drive circuit of the television receiver.

Currents are supplied to the capacitor terminal 2 by means of current sources 5, 6 and 7. The current iR supplied by the current source 5 is a fixed reference current typically of the order of 6 micro amps. The current source 6 is an adjustable current source and supplies a current $i_H$ having a value of typically between 0 and 3 micro amps and allows a preset adjustment of picture height to be made by the manufacturer.

The current source 7 provides additional control of the vertical ramp and is the subject of a copending application.

A current of value $i_c$ is fed over a line 8 to the terminal 2 and provides a height compensation control current. In accordance with the present invention this current is adjusted automatically in accordance with changes in the tube beam current in order to compensate picture height for changes in tube EHT voltage.

The currents $i_R$, $i_H$ and $i_c$ depend upon the particular television line standard in use ie 525 or 625 lines and the values of these currents are changed automatically in accordance with signals from a reception standard recognition circuit.

Anode current is fed to the picuture tube from a terminal 9 over a line 10. The terminal 9 is supplied with current from a potential supply terminal 11, typically a 5 volt supply terminal, through a resistor 12. A resistor 13 couples the terminal 9 to a further terminal 14 which is itself coupled via line 15 to one input 16 of a multiplier 17.

A second input 18 of the multiplier 17 is connected to the output of digital to analogue converter 19 which receives a 6 bit digital signal at its input 20. A multiplied output signal appears at the output terminal 21 of the multiplier 17 to provide the control current $i_c$.

Anode current, supplied to the anode of the picture tube via the line 10 will produce a voltage at the terminal 9 which is dependent upon the magnitude of the anode current.

The anode current, which effectively constitutes a measure of the beam current of the tube will change when the brightness changes in the picture displayed by the tube. Such brightness changes may occur either by operator adjustment of a brightness control, or by brightness changes in the picture information supplied to the cathode of the picture tube. Consequently as the brightness of the picture changes, so the voltage at the terminal 9 will change in a representative manner.

The voltage at the terminal 9 is converted to a current $I_{EHT}$ by means of the resistor 13 and this current is fed, via the diode 15, to the input 16 the multiplier 17.

The second input 18 of the multiplier 17, receives a reference current $I_{DAC}$ from the output of the digital to analogue converter 19. The current $I_{DAC}$ is produced in response to a digital code fed to the input terminals 20 of the digital to analogue converter. The digital code, is a fixed value chosen in dependence upon the characteristics of the particular tube and EHT supply.

The currents $I_{EHT}$ and $I_{DAC}$ fed to the multiplier 17 are multiplied therein to produce the compensation current $i_c$ which compensates the picture height for changes in EHT voltage.

Utilizing the digital to analogue converter 19 to produce the multiplier current $I_{DAC}$ enables the picture height compensation current $i_c$ to be varied for different values of fixed external components by suitable adjustment of the digital value fed to the input terminals 20 of the converter 19.

The invention is particularly applicable to fabrication as an integrated circuit. All the components below the dashed line 22 with the exception of the ramp capacitor 1 may be integrated into a single chip, the terminal 2 forming a pin of the integrated circuit.

Although in the described embodiment the reference current $I_{DAC}$ has been derived from a digital to analogue converter, this is not essential and any convenient means may be used to supply the current. The use of the converter is particularly, advantageous in an integrated in which the present invention forms part of a microprocessor controlled single chip television signal processing circuit.

Also although the invention has been particularly described with reference to the control of picture height in a vertical timebase circuit the invention is equally applicable to the control of picture width. In that case the current $i_c$ would be supplied, not to the vertical ramp capacitor terminal 2 but to separate terminal for connection to modulate the timebase waveform generated by the horizontal timebase circuit.

Also although the invention is particularly applicable to a domestic television receiver, it is equally applicable to any television type display, and may be used for example, in monitors, computer displays and graphics type displays.

## Claims

1. A correction circuit for a television picture tube timebase comprising; means (9,13) for providing an electrical signal dependent upon the instantaneous EHT voltage of the tube; characterised by means (19) for providing an adjustable reference signal and a multiplier (17) for multiplying the electrical signal and the reference signal to provide a correction signal for correcting at least one picture dimension for changes in EHT voltage.

2. The circuit of claim 1 wherein the means (19) for providing the adjustable reference signal comprises a digital-to-analog converter (19) having input means (20) for receiving a selectable digital code and an output for providing an analogue output signal.

3. The circuit of claim 1 or 2 wherein the means (9,13) for providing the said electrical signal comprises a tap (18) coupled to a supply line (10) for supplying anode current to the picture tube.

4. The circuit of claim 3 wherein the tap (13) is a resistive tap.

5. The circuit of any preceding claim wherein the correction signal comprises a signal for controlling picture height.

6. The circuit of claim 5 wherin the correction signal is fed to a vertical ramp capacitor (1) whereby the vertical ramp voltage generated on the ramp capacitor (1) includes a component for the correction of picture height for changes in EHT voltage.

7. The circuit of any one of claims 1 to 4 wherein the electrical signal is fed to correct the horizontal timebase waveform to correct the picture width for changes in EHT voltage.

8. The circuit of any preceding claim provided in integrated circuit form.

9. A television receiver including a correction circuit as claimed in any preceding claims.

## Revendications

1. Circuit de correction de la base de temps d'un tube image de télévision, comprenant : un moyen (9, 13) servant à produire un signal électrique en fonction de la très haute tension (EHT) instantanée du tube ; caractérisé par un moyen (19) servant à produire un signal de référence ajustable et un mutiplicateur (17) servant à multiplier le signal électrique et le signal de référence afin de produire un signal de correction permettant de corriger au moins une dimension de l'image en cas de variations de la tension EHT.

**2.** Circuit selon la revendication 1, où le moyen (19) servant à produire le signal de référence ajustable comprend un convertisseur numérique-analogique (19) possédant un moyen d'entrée (20) qui reçoit un code numérique pouvant être sélectionné et une sortie servant à produire un signal de sortie analogique.

**3.** Circuit selon la revendication 1 ou 2, où le moyen (9, 13) servant à produire ledit signal électrique comprend une borne de prise (18) couplée à une ligne d'alimentation (10) servant à fournir le courant d'anode au tube image.

**4.** Circuit selon la revendication 3, où la borne de prise (13) est une borne de prise résistive.

**5.** Circuit selon l'une quelconque des revendications précédentes, où le signal de correction comprend un signal servant à commander la hauteur de l'image.

**6.** Circuit selon la revendication 5, où le signal de correction est fourni à un condensateur (1) de formation de rampe verticale, de sorte que la tension de rampe verticale produite sur le condensateur de formation de rampe (1) comporte une composante destinée à la correction de la hauteur de l'image en fonction des variations de la tension EHT.

**7.** Circuit selon l'une quelconque des revendications 1 à 4, où le signal électrique est délivré de façon à corriger la forme d'onde de base de temps horizontale, afin de corriger la largeur de l'image en fonction des variations de la tension EHT.

**8.** Circuit selon l'une quelconque des revendications précédentes, produit sous forme de circuit intégré.

**9.** Récepteur de télévision comportant un circuit de correction selon l'une quelconque des revendications précédentes.

**Ansprüche**

**1.** Korrekturschaltung für die Zeitbasis einer Fernsehbildröhre, enthaltend eine Einrichtung (9,13) zum Abgeben eines elektrischen Signals in Abhängigkeit von der augenblicklichen Hochspannung der Röhre, **gekennzeichnet durch** eine Einrichtung (19) zum Liefern eines einstellbaren Bezugssignals und einen Multiplizierer (17) zum Multiplizieren des elektrischen Signals und des Bezugssignals, um ein Korrektursignal zum Korrigieren wenigstens einer Bildabmessung auf Änderungen in der Hochspannung zu liefern.

**2.** Schaltung nach Anspruch 1, bei der die Einrichtung (19) zum Liefern des einstellbaren Bezugssignals einen Digital/Analog-Wandler (19) aufweist, mit einer Eingabeeinrichtung (20) zum Aufnehmen eines wählbaren Digitalcodes und eines Ausgangs zum Abgeben eines analogen Ausgangssignals.

**3.** Schaltung nach Anspruch 1 oder 2, bei der die Einrichtung (9,13) zum Liefern des elektrischen Signals eine Anzapfung (18) aufweist, die mit einer Versorgungsleitung (10) zum Zuführen von Anodenstrom zur Bildröhre verbunden ist.

**4.** Schaltung nach Anspruch 3, bei der die Anzapfung (13) eine Widerstandsanzapfung ist.

**5.** Schaltung nach einem der vorhergehenden Ansprüche, bei der das Korrektursignal ein Signal zum Beeinflussen der Bildhöhe enthält.

**6.** Schaltung nach Anspruch 5, bei der das Korrektursignal einem Vertikalrampenkondensator (1) zugeführt ist, wodurch die Vertikalrampenspannung, die an dem Rampenkondensator (1) erzeugt wird, eine Komponente zur Korrektur der Bildhöhe auf Änderungen in der Hochspannung enthält.

**7.** Schaltung nach einem der Ansprüche 1 bis 4, bei der das elektrische Signal zugeführt wird, um den Horizontalzeitbasissignalverlauf zu korrigieren, um die Bildbreite auf Änderungen in der Hochspannung zu korrigieren.

**8.** Schaltung nach einem der vorhergehenden Ansprüche, die in integrierter Schaltungsform vorliegt.

**9.** Fernsehempfänger, enthaltend eine Korrekturschaltung nach einem der vorhergehenden Ansprüche.

ANODE CURRENT